# EUROPÄISCHE PATENTSCHRIFT

(11) **EP 2 425 705 B1**
(45) Veröffentlichungstag und Bekanntmachung des Hinweises auf die Patenterteilung: **06.01.2016**
(21) Anmeldenummer: 11170854.1
(22) Anmeldetag: 22.06.2011
(51) Int. Cl.: A01D 34/62, A01F 29/09

(54) **Schneidvorrichtung**
Cutting device
Dispositif de coupe

(30) Priorität: 07.09.2010 DE 102010037358
(43) Veröffentlichungstag der Anmeldung: 07.03.2012
(73) Patentinhaber: CLAAS Selbstfahrende Erntemaschinen GmbH, 33428 Harsewinkel (DE)
(72) Erfinder: Roggenland, Michael, 59757 Arnsberg (DE); Brockhan-Lüdemann, Steffen, 27386 Kirchwalsede (DE)

(56) Entgegenhaltungen:
- EP-A1- 0 291 216
- EP-A1- 1 582 260
- WO-A1-98/47345
- DE-A1- 3 010 416
- FR-A1- 2 537 832
- US-A- 5 018 342

## Beschreibung

Die Erfindung betrifft eine Schneidvorrichtung für Erntegut gemäß dem Oberbegriff des Patentanspruchs 1. Daneben betrifft die Erfindung ein Verfahren zur Einstellung der Gegenschneide einer Schneidvorrichtung gemäß dem Oberbegriff des Patentanspruchs 13.

Landwirtschaftliche Erntemaschinen wie insbesondere Feldhäcksler weisen eine Schneidvorrichtung auf, die ein als Messertrommel ausgeführtes Schneidwerkzeug umfasst, das sich gegenüber einer ruhenden Gegenschneide dreht. Erntegut, das in einen von rotierender Messertrommel und Gegenschneide gebildeten Eingriffsbereich gerät, wird durch Zusammenwirkung der an der rotierenden Messertrommel befestigten Schneidmesser mit der Gegenschneide zerkleinert, insbesondere gehäckselt. Die Messertrommel wird daher auch als Häckseltrommel bezeichnet.

Die Schneidmesser nutzen sich im Betrieb ab. Daher werden diese wiederholt nachgeschliffen, um einerseits eine gleichbleibende Schnittqualität zu erzielen, andererseits die Schnittkräfte und damit die für das Häckseln aufzuwendende Antriebsenergie gering zu halten.

Bei jedem Schleifvorgang wird mit der Schärfung der abgestumpften Schnittkanten Material an den Schneidmessern abgetragen. Dies führt zu einem veränderten Abstand zwischen der Gegenschneide und den Schnittkanten der an der Messertrommel befestigten Schneidmesser. Der Häckselprozess wird dadurch beeinträchtigt.

Ein präziser und energieeffizienter Häckselprozess lässt sich nur durchführen, wenn - neben der Messerschärfe - auch ein bestimmter Abstand zwischen Gegenschneide und Schneidwerkzeug besteht. Ein zu großer Abstand führt zu teils unvollständigem Schnitt des eintretenden Guts und kann die aufzubringenden Schnittkräfte erhöhen. Ein zu geringer Abstand birgt insbesondere die Gefahr, dass sich Schneidmesser und Gegenschneide berühren, was zu Materialschäden bzw. sogar zu gefährlichem Ablösen von Material und/oder Maschinenelementen führen kann.

Es besteht daher ein Bedarf, den Abstand zwischen Gegenschneide und Schneidwerkzeug präzise einstellen zu können, was aufgrund der im Betrieb wirkenden hohen Schnittkräfte konstruktiv eine Herausforderung darstellt.

Aus der Praxis ist es bekannt, die Gegenschneide, die einen etwa parallel zur Rotationsachse der Messertrommel verlaufenden Gegenschneidbalken aufweist, an deren beiden gegenüberliegenden Enden jeweils an eine Verstelleinrichtung zu koppeln. Mittels einer Steuereinrichtung lassen sich die beiden Verstelleinrichtungen ansteuern, so dass sich die Abstandslage der Gegenschneide gegenüber dem Schneidwerkzeug verändern lässt. Da die Verstelleinrichtungen unabhängig voneinander ansteuerbar sind, lässt sich die Gegenschneide so seitenweise verstellen.

Zur Einstellung einer an den Schleifzustand des Schneidwerkzeugs angepassten Abstandslage der Gegenschneide nach einem Schleifvorgang ist eine Abstandsermittlung oder zumindest -abschätzung unerlässlich. Diese erfolgt in der Praxis durch Heranfahren der Gegenschneide auf das rotierende Schneidwerkzeug zu bis eine Berührung stattfindet, was sich beispielsweise anhand von sogenanntem "Klopfen" erkennen lässt, das insbesondere durch sogenannte "Klopfsensoren" erfassbar ist, bei denen es sich um an der Gegenschneide angebrachte Schwingungssensoren handelt.

Um einen gewünschten Abstand zwischen Gegenschneide und Schneidwerkzeug einzustellen, ist es bekannt, nach einem Schleifvorgang des Schneidwerkzeugs die Gegenschneide aus einer vom Schneidwerkzeug beabstandeten Position zum Schneidwerkzeug heranzufahren. In der EP 0 291 216 B1 wird vorgeschlagen, zunächst die Verstelleinrichtung einer ersten Seite anzusteuern, um die ihr zugeordnete Seite der Gegenschneide zum Schneidwerkzeug hin soweit vorzufahren bis eine Berührung zwischen rotierendem Schneidwerkzeug und Gegenschneide stattfindet. Nach der Berührung erfolgt ein Zurückfahren der ersten Seite um einen bestimmten Weg, so dass ein gewünschter Abstand erreicht sein soll. Nach Verstellung dieser ersten Seite, erfolgt auf gleiche Weise eine Verstellung der gegenüberliegenden zweiten Seite der Gegenschneide, also wieder ein Vorfahren bis zur Berührung und ein anschließendes Zurückfahren um einen gewünschten Abstand.

An einer solchen Einstellung bestehen Nachteile. Denn aufgrund der bereits angesprochenen hohen im Betrieb auf die Gegenschneide wirkenden Kräfte ist diese derart steif gelagert, dass sie sich nicht rückwirkungsfrei verstellen lässt. Die Verstellung der Gegenschneide auf einer Seite führt damit zu einer Verspannung der Gegenschneide selbst und/oder der jeweiligen Verstelleinrichtung. Es besteht daher beim Heranfahren der Gegenschneide auf die in EP 0 291 216 B1 beschriebene Weise die Gefahr, dass die Gegenschneide aufgrund verschiedener mechanischer Effekte (Setzeffekte, Rückverformungen, Übergang von Haft- in Gleitreibung) in das Schneidwerkzeug "springt". Dies kann Beschädigungen des Schneidwerkzeugs hervorrufen und führt zu Ungenauigkeiten bei der Einstellung.

Da bisher verwendete Klopfsensoren in der Regel nur eine Berührung der Gegenschneide am Schneidwerkzeug als solche erkennen, nicht aber die Lage der Berührungsstelle ermitteln können, besteht daneben die Gefahr, dass eine vom Sensor detektierte Berührung der Seite der zu diesem Zeitpunkt angesteuerten Verstelleinrichtung zugeordnet wird, obwohl tatsächlich - aufgrund von Verspannungen und dadurch hervorgerufenen unkontrollierten Rückstellbewegungen oder anderen Effekten - die Berührung auf der anderen Seite stattfand. Eine falsche Einstellung der Abstandslage ist die Folge.

Es ist daher eine Aufgabe der vorliegenden Erfindung, eine Schneidvorrichtung der eingangs genannten Art anzugeben, die ein genaueres Heranfahren der Gegenschneide an das Schneidwerkzeug ermöglicht und Beschädigungen am Schneidwerkzeug oder an der Gegenschneide vermeidet. Daneben soll ein Verfahren mit entsprechendem Zweck angegeben werden.

Diese Aufgabe wird gelöst mit einer Schneidvorrichtung gemäß Patentanspruch 1. Demnach nähert sich erfindungsgemäß mit jedem der abwechselnd durchgeführten Arbeitsschritte das jeweils durch die Verstelleinrichtung bewegte Ende der Gegenschneide dem Schneidwerkzeug um einen definierten Stellweg an. Dies erfolgt durch Vor- und Zurückbewegung der jeweils aktivierten Seite, wobei die Vorwärtsbewegung größer ist als die Rückwärtsbewegung, so dass eine Vorwärtsbewegung resultiert. Erfindungsgemäß ergibt sich gegenüber einer reinen Vorwärtsbewegung der Vorteil, dass bei jedem Arbeitsschritt mechanische Verspannungen an der Gegenschneide und der jeweiligen Verstelleinrichtung abgebaut werden. Jeweils nach Absolvieren eines Arbeitsschritts - also der Verstellung um eine erste Stellweite vor und um eine zweite, geringere Stellweite zurück - sind die jeweilige Verstelleinrichtung und die Gegenschneide also freier von Verspannungen, wodurch unkontrolliertes "Springen" vermieden werden kann, das bisher bei Verstellung einer verspannten Gegenschneide auftreten konnte. Weiterhin lässt sich durch das wechselseitige gleichmäßige Heranfahren eine weitestgehend parallele Ausrichtung der Gegenschneide gegenüber dem Schneidwerkzeug erreichen. Daneben ist das Risiko einer seitlich falschen Zuordnung von Klopfsignalen verringert. Mit der erfindungsgemäßen Schneidvorrichtung lässt sich daher ein genaueres Heranfahren der Gegenschneide erzielen.

Wie bereits erwähnt, ist die Gegenschneide aufgrund hoher darauf wirkender Kräfte verhältnismäßig steif eingespannt. Um vor Beginn des Einstellvorgangs der Gegenschneide gegebenenfalls bestehende hohe Haftreibungskräfte an Lagerpunkten der Gegenschneide zu überwinden und damit ungewolltes Springen zu vermeiden, ist vorgesehen, dass die Steuereinrichtung vor Beginn des Heranfahrens zunächst eine Ansteuerung der Verstelleinrichtungen vornimmt, um die Gegenschneide vom Schneidwerkzeug weg zu bewegen. Damit sind deren Lagerstellen frei beweglich, was ein präzises Heranfahren begünstigt.

Vorteilhaft umfasst die Schneidvorrichtung zumindest einen Sensor, der sich zur Erkennung einer Berührung von Gegenschneide und Schneidwerkzeug eignet, wobei die Steuereinrichtung die Verstelleinrichtungen in Abhängigkeit empfangener Signale dieses Sensors ansteuert. In für sich bekannter Weise handelt es beispielsweise um einen Klopfsensor, einen Aufprallsensor oder einen sonstigen akustischen Sensor. Dieser kann an der Gegenschneide selbst angeordnet sein, um Körperschallschwingungen der Gegenschneide zu erfassen. Mehrere solcher Sensoren können an unterschiedlichen Positionen angeordnet sein, um eine sichere bzw. genauere Erfassung zu gewährleisten.

Alternativ oder ergänzend ist die Verwendung zumindest eines Sensors denkbar, der sich zur Erkennung des Erreichens eines Mindestabstands zwischen Gegenschneide und Schneidwerkzeug eignet, wobei die Steuereinrichtung die Verstelleinrichtungen in Abhängigkeit empfangener Signale dieses Sensors ansteuert. In diesem Fall erkennt der Sensor also nicht eine Berührung zwischen Gegenschneide und Schneidwerkzeug, sondern erkennt anhand geeigneter Umstände einen Mindestabstand zwischen diesen. Der Sensor könnte beispielsweise Luftschwingungen (Schall) erfassen, zu denen das rotierende Schneidwerkzeug die Gegenschneide ab Erreichen einer bestimmten Abstandslage anregt. Andere berührungslose Erkennungsarten (z. B. optisch) sind denkbar.

Gemäß einer vorteilhaften Weiterbildung der Schneidvorrichtung führt die jeweils aktivierte Verstelleinrichtung im Fall einer durch den Sensor erkannten Berührung oder des Erreichens eines Mindestabstands während eines Arbeitsschritts eine Verstellung des ihr zugeordneten Endes der Gegenschneide zusätzlich um eine dritte Stellweite vom Schneidwerkzeug weg durch, wobei die zweite und dritte Stellweite zusammen größer sind als die erste Stellweite. Eine derartige Verstellung sorgt dafür, dass sich die Gegenschneide auf vorteilhafte Weise weitestgehend parallel gegenüber dem Schneidwerkzeug ausrichtet, indem die Seite der Gegenschneide, auf welcher aufgrund des Sensorsignals während der Verstellung eine Berührung oder das Erreichen eines Mindestabstands anzunehmen ist, vom Schneidwerkzeug weggefahren wird. Das Problem einer mittels bisheriger Sensorik erschwerten Seitenzuordnung von Sensorsignalen wird damit konstruktiv umgangen.

Vorteilhaft veranlasst die Steuereinrichtung die abwechselnde Aktivierung der Verstelleinrichtungen solange, bis der Sensor in zwei aufeinanderfolgenden Arbeitsschritten jeweils eine Berührung oder einen Mindestabstand gegenüber dem Schneidwerkzeug erkannt hat.

Die erfindungsgemäß vorgesehene Verstellung lässt sich vorteilhaft realisieren, indem jeder Seite der Gegenschneide eine Messeinrichtung zugeordnet ist, die sich zur Erfassung einer mit dem Verstellweg der jeweiligen Seite korrespondierenden Größe eignet. Es kann sich bei derartigen Messeinrichtungen beispielsweise um Inkrementalgeber handeln. Mittels derartiger Messeinrichtungen kann jede der Verstelleinrichtungen das ihr zugeordnete Ende der Gegenschneide um definierte Stellweiten vor oder zurück in Bezug auf das Schneidwerkzeug verstellen.

Zweckmäßigerweise umfasst die Schneidvorrichtung eine Starteinrichtung, wobei durch Auslösen der Starteinrichtung die Steuereinrichtung ein Programm zur Einstellung eines im Programm festlegbaren Gegenschneidenabstands ausführt. Die Einstellung gemäß einem in der Steuereinrichtung ablaufenden Programm bietet den Vorteil, dass sich für die Einstellung des Gegenschneidenabstands vorzunehmende Maßnahmen und zu erfüllende Bedingungen flexibel darin einbinden lassen.

Vorteilhaft kann die abwechselnde Aktivierung der Verstelleinrichtungen mit einer Aktivierung derjenigen der beiden Verstelleinrichtungen beginnen, die gemäß eines Signals der ihr zugeordneten Messeinrichtung einen kleineren Abstand gegenüber dem Schneidwerkzeug aufweist.

Zum Erreichen eines gewünschten Gegenschneidenabstands ist die Steuereinrichtung zweckmäßigerweise betreibbar, die Gegenschneide aus einer durch das Heranfahren an das Schneidwerkzeug gefundenen Ausgangsposition durch Ansteuerung der Verstelleinrichtungen in eine Betriebsposition zu verfahren, die von der Ausgangsposition einen festlegbaren Abstand aufweist. Ein solcher Abstand kann beispielsweise in einem von der Steuereinrichtung ausgeführten Programm veränderbar hinterlegt sein.

Gemäß einer vorteilhaften Weiterbildung der Erfindung vergleicht das Programm nach Durchführung der Arbeitsschritte zum Heranfahren der Gegenschneide an das Schneidwerkzeug die Stellweiten der Verstelleinrichtungen und veranlasst bei Überschreiten einer im Programm festlegbaren Differenz der Stellweiten eine Wiederholung des Einstellvorgangs.

Die beschriebene Schneidvorrichtung eignet sich besonders zur Verwendung als Arbeitsorgan einer landwirtschaftlichen Erntemaschine.

Neben der beschriebenen Schneidvorrichtung wird die eingangs genannte Aufgabe gelöst durch ein Verfahren zur Einstellung der Gegenschneide einer Schneidvorrichtung für Erntegut gemäß Patentanspruch 13. Hinsichtlich der damit erzielbaren Wirkungen und vorteilhaften Ausgestaltungen sei auf die vorigen Ausführungen verwiesen, die entsprechend für das erfindungsgemäße Verfahren gelten.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung. Es zeigen:
- Fig. 1: eine schematische Seitenansicht eines Feldhäckslers,
- Fig. 2: eine schematische Seitenansicht eines Ausführungsbeispiels einer erfindungsgemäßen Schneidvorrichtung,
- Fig. 3: eine schematische Ansicht der Schneidvorrichtung aus Fig. 2 gemäß der Schnittlinie A-A im Halbschnitt von vorn ohne Signalanbindungen an die Steuereinrichtung.

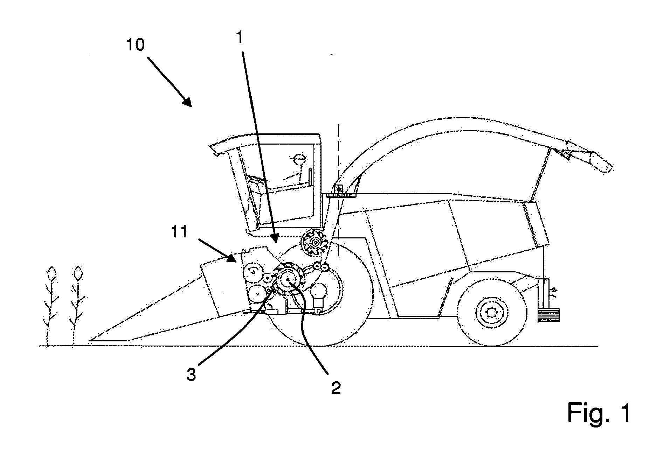

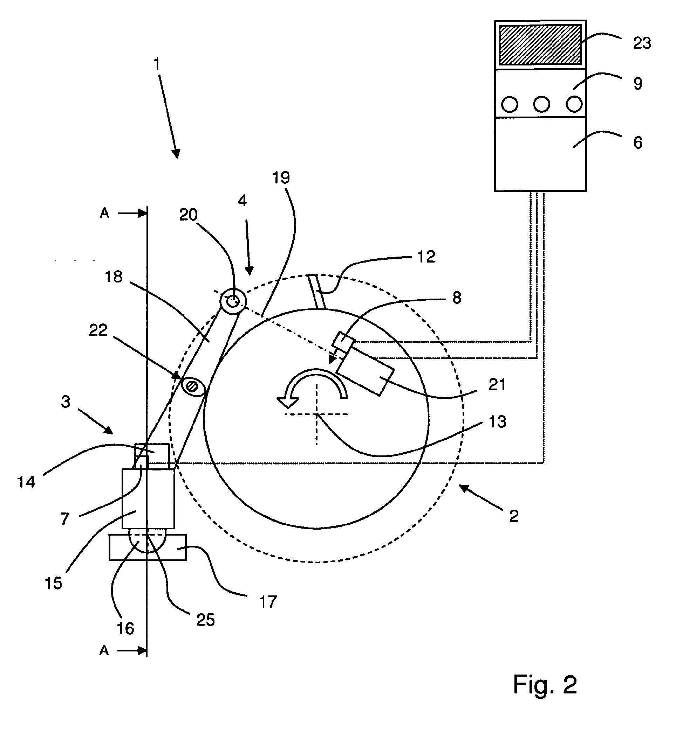

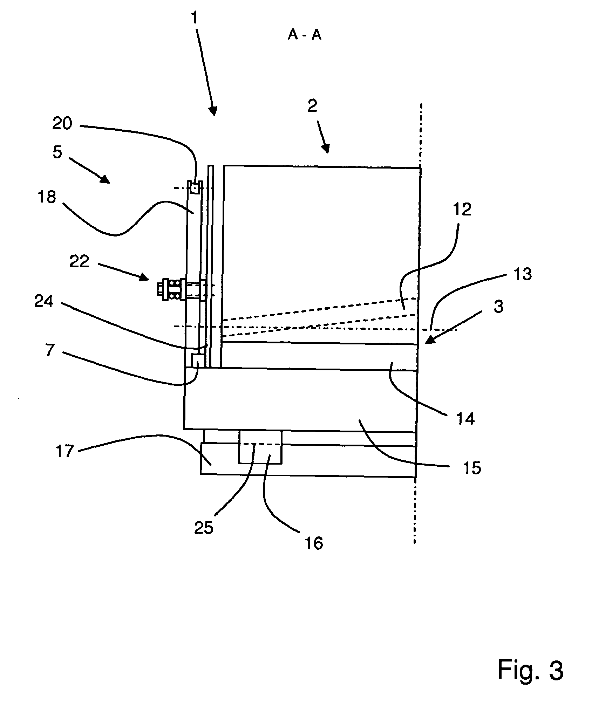

In Fig. 1 zeigt beispielhaft einen Feldhäcksler 10. Der Feldhäcksler 10 ist als selbstfahrende Erntemaschine mit Vorder- und Hinterachse ausgeführt und eignet sich zur Fahrt über ein Feld, um angedeuteten Pflanzenbestand zu ernten. Im Erntebetrieb schneidet der Feldhäcksler 10 mittels eines nicht näher bezeichneten Vorsatzgeräts den Pflanzenbestand vom Feld ab und führt diesen einem Einzugsorgan 11 zu, das unter anderem zwei Vorpresswalzenpaare umfasst, die das geerntete Gut verdichten. Anschließend wird das geerntete Gut einer Schneidvorrichtung 1 ("Häckselaggregat") zugeführt, die im Wesentlichen eine rotierende Messertrommel 2 und eine dieser gegenüber ruhende Gegenschneide 3 umfasst. Der Aufbau und die Funktionsweise dieser Schneidvorrichtung 1 werden im Zusammenhang mit den Fig. 2 und 3 näher erläutert. Beim Durchlaufen der Schneidvorrichtung 1 wird das Erntegut zerkleinert, um anschließend über einen hinter einer Fahrerkabine aufsteigenden Förderschacht und einen sich daran anschließenden Auswurfkrümmer aus dem Feldhäcksler 10 ausgeworfen zu werden.

Die Messertrommel 2 ist mit einer Vielzahl von (in Fig. 1 nicht bezeichneten) Messern bestückt und dreht sich im Erntebetrieb gemäß Darstellung in Fig. 1 entgegen dem Uhrzeigersinn, um in Zusammenwirkung mit der ruhenden Gegenschneide 3 Erntegut zu schneiden, das vom Einzugsorgan 11 als vorgepresste Erntegutmatte in Richtung der Schneidvorrichtung 1 gefördert wird.

Da sich die Messer im Erntebetrieb abnutzen, sind diese bedarfsweise nachzuschleifen, wozu eine Schleifeinrichtung an den stumpf gewordenen Messerkanten Material abträgt. Aufgrund des Materialabtrags besteht nach dem Schleifvorgang ein veränderter Abstand zwischen der Gegenschneide 3 und der für den Häckselprozess wirksamen Kante der an der Messertrommel 2 befestigten Messer. Die Erfindung bezieht sich auf eine Vorrichtung und ein Verfahren, die eine bessere Einstellbarkeit dieses Abstands ermöglichen.

Fig. 2 und 3 zeigen ein Ausführungsbeispiel einer erfindungsgemäßen Schneidvorrichtung 1 in schematischer Seitenansicht bzw. gemäß der Schnittlinie A-A im Halbschnitt von vorn. Der Halbschnitt gemäß Fig. 3 ist bezüglich der Strichpunktlinie im rechten Bildteil spiegelbildlich zu einer Volldarstellung zu ergänzen. Die Schneidvorrichtung 1 nach Fig. 2 und 3 kommt vorteilhaft in einem wie in Fig. 1 beschriebenen Feldhäcksler 10 zum Einsatz.

Die gezeigte Schneidvorrichtung 1 umfasst im Wesentlichen eine um eine Rotationsachse 13 drehbare Messertrommel 2 und eine der Messertrommel 2 gegenüber verstellbare Gegenschneide 3. Beispielhaft ist ein an der Messertrommel 2 befestigtes Schneidmesser 12 eingezeichnet, das einer Vielzahl weiterer umfangsmäßig verteilter (nicht eingezeichneter) Schneidmesser angehört. Bei Drehung der Messertrommel 2 um die Rotationsachse 13 überstreichen die Schneidmesser 12 den in Fig. 2 gestrichelt eingezeichneten äußeren Hüllkreis der Messertrommel 2. Der Radius dieses Hüllkreises wird durch den Schleifzustand der Schneidmesser 12 beeinflusst.

Die Gegenschneide 3 umfasst im Wesentlichen einen Gegenschneidenträger 15, auf den ein Gegenschneidbalken 14 montiert ist, beispielsweise verschraubt. Der Gegenschneidenträger 15 stützt sich über Gelenkköpfe 16 gegenüber einem rahmenfesten Querträger 17 ab. Demnach ist die Gegenschneide 3 um eine zur Rotationsachse 13 parallele Gelenkachse 25 schwenkbar, wobei sich durch Schwenken der Gegenschneide 3 die Abstandslage des Gegenschneidbalkens 14 gegenüber der Messertrommel 2 verändern lässt.

Während sich der Gegenschneidbalken 14, wie in Fig. 3 zu sehen, etwa über die Breite der Messertrommel 2 erstreckt, weist der Gegenschneidenträger 15 eine darüber hinaus gehende Breite auf. Auf dem Gegenschneidenträger 15 ist an beiden seitlichen Endbereichen jeweils ein als Klopfsensor dienender Schwingungssensor 7 angebracht. Da Fig. 2 eine Seitenansicht ist und Fig. 3 die Schneidvorrichtung 1 lediglich im Halbschnitt zeigt, ist jeweils nur einer der Schwingungssensoren 7 sichtbar.

Wie Fig. 2 andeutet, ist jeder der Schwingungssensoren 7 über ein Kabel mit einer Steuereinrichtung 6 verbunden, die vorzugsweise einen Mikroprozessor zur Datenverarbeitung enthält und sich zur Ausführung frei programmierbarer Arbeitsprogramme eignet.

Fig. 2 und 3 zeigen, dass die seitlichen Enden der Gegenschneide 3 jeweils an eine Verstelleinrichtung 4 bzw. 5 gekoppelt sind, wobei Fig. 2 die Verstelleinrichtung 4 zeigt und in Fig. 3 aufgrund der anderen Darstellungsperspektive die gegenüberliegende Verstelleinrichtung 5 zeigt, welche baulich der Verstelleinrichtung 4 entspricht. Mittels der Verstelleinrichtungen 4, 5 lässt sich die Abstandslage der Gegenschneide 3 gegenüber der Messertrommel 2 verändern.

Dazu ist an beiden Enden des Gegenschneidenträgers 15 jeweils seitlich außerhalb der Messertrommel 2 ein Hebelarm 18 befestigt, der sich quer zur Rotationsachse 13 der Messertrommel 2 erstreckt. Der Hebelarm 18 ist mit einer Reibungsbremse 22 ausgestattet. Dazu ist an jedem Hebelarm 18 ein Durchgang ausgebildet, der - wie in Fig. 2 ovalförmig angedeutet - größer ist als der Querschnitt eines sich durch diesen erstreckenden, an einer Gehäusewand 24 (vgl. Fig. 3) befestigten Bremsstifts. Der Hebelarm 18 ist daher innerhalb des durch den Durchgang vorgegebenen Spiels gegenüber der rahmenfesten Gehäusewand 24 beweglich, um Verstellbewegungen der Gegenschneide 3 durchführen zu können. Durch eine auf den Bremsstift aufgebrachte Federvorspannung wird das Bewegungsspiel des Hebelarms 18 jedoch gebremst.

Der Hebelarm 18 - und damit die gesamte Gegenschneide 3 - lässt sich über ein Schraubgetriebe verstellen, das von einem rahmenfesten Motor 21 angetrieben wird. Dazu ist die Abtriebsachse des Motors 21 als Gewindespindel 19 ausgeführt, die in eine am der Gegenschneide 15 abgewandten Ende des Hebelarms 18 gelagerte Spindelmutter 20 eingreift. Demnach verursacht eine Drehung der Abtriebsachse des Motors 21 ein Schwenken der Gegenschneide 3.

Da die Verstelleinrichtungen 4 und 5 beider Seiten der Gegenschneide 3 unabhängig voneinander betätigbare Motoren 21 aufweisen, ist eine seitenweise Verstellung der Gegenschneide 3 möglich. Aufgrund der statisch überbestimmten Lagerung der Gegenschneide 3 führt die seitenweise Verstellung zu Verspannungen der beteiligten Komponenten, unter kann sich die Gegenschneide 3 verformen.

Zur Verstellung der Abstandslage der Gegenschneide 3 steuert eine Steuereinrichtung 6 die Motoren 21 über eine Signalleitung an. Vorteilhaft steht die Steuereinrichtung 6 dabei mit Schwingungssensoren 7 in Verbindung, die sich zur Erkennung einer Berührung von Gegenschneide 3 und Messertrommel 2 eignen, sowie mit Inkrementalgebern 8, die den Motoren 21 jeweils zugeordnet sind und sich zur Erfassung von Stellweiten der jeweiligen Verstelleinrichtung 4 bzw. 5 eignen. Weiterhin ist die Steuereinrichtung 6 zum Signalaustausch mit einer Bedieneinrichtung 9 verbunden, welcher vorteilhaft eine Anzeige 23 zugeordnet ist. Zweckmäßigerweise sind zumindest die Bedieneinrichtung 9 und die Anzeige 23 in einer Fahrerkabine des Feldhäckslers 10 angeordnet, um von einem Maschinenbediener betätigt werden zu können bzw. dem Maschinenbediener Informationen bezüglich des Verstellvorgangs anzeigen zu können.

Eine Einstellung der Gegenschneide 3 läuft wie folgt ab. Nach einem erfolgten Schleifvorgang der Schneidmesser 12 hat sich der Abstand zwischen wirksamer Schnittkante der Messertrommel 2 und Gegenschneide 3 verändert und ist zunächst unbekannt. Um (beispielsweise für den Erntebetrieb) ein gewünschtes Abstandsmaß zwischen Gegenschneide 3 und Messertrommel 2 einzustellen, betätigt ein Maschinenbediener eine an der Bedieneinrichtung 9 vorgesehene Starteinrichtung. Hierdurch führt die Steuereinrichtung 6 ein Programm zur Einstellung des Gegenschneidenabstands aus.

Demnach wird zunächst die Gegenschneide 3 mittels beider Verstelleinrichtungen 4 und 5 um eine bestimmte Stellweite von der Messertrommel 2 weggefahren. Durch dieses vorläufige Wegfahren sollen die Gelenkköpfe 16 gegenüber dem Querträger 17 sowie die Bremsen 22 an den Hebelarmen 18 gangbar gemacht werden. Erst anschließend beginnt der eigentliche Einstellvorgang.

Der Einstellvorgang umfasst ein verspannungsarmes Heranfahren der Gegenschneide 3 an die Messertrommel 2. Erfindungsgemäß aktiviert die Steuereinrichtung 6 dazu die Verstelleinrichtungen 4 oder 5 zur Durchführung jeweils eines Arbeitsschritts abwechselnd. Vorteilhaft veranlasst die Steuereinrichtung 6, dass diejenige der Verstelleinrichtung 4 oder 5 mit dem Heranfahren beginnt, die gemäß eines Stellungssignals des ihr zugeordneten Inkrementalgebers 8 einen kleineren Abstand gegenüber der Messertrommel 2 aufweist. Die Inkrementalgeber 8 können beispielsweise Impulsgeber umfassen, so dass die Seite mit dem kleineren Impulsstand mit dem Einstellvorgang beginnt.

Die nun abwechselnd durchzuführenden Arbeitsschritte beinhalten, dass die jeweils aktivierte Verstelleinrichtung 4 oder 5 das ihr zugeordnete Ende der Gegenschneide 3 zunächst um eine erste Stellweite zur Messertrommel 2 hin und anschließend um eine zweite Stellweite wieder von der Messertrommel 2 weg bewegt, wobei die zweite Stellweite kleiner ist als die erste Stellweite. Dadurch ist gewährleistet, dass die sich Gegenschneide 3 mit der jeweils aktivierten Seite aufgrund des Vor- und Zurückfahrens relativ verspannungsfrei der Messertrommel 2 nähert. Gemäß einer vorteilhaften Ausführung der Erfindung ist dabei die erste Stellweite etwa doppelt so groß wie die zweite Stellweite. Die wechselseitige Durchführung dieser Arbeitsschritte durch Ansteuern der beiden Verstelleinrichtungen 4 und 5 führt zu einer schrittweisen Annäherung der Gegenschneide 3 an die Messertrommel 2, wobei gleichzeitig deren Ausrichtung zur Messertrommel 2 aufrechterhalten wird.

Vorteilhaft überwacht die Steuereinrichtung 6 mittels der Schwingungssensoren 7 ("Klopfsensoren"), ob während der Durchführung der einzelnen Arbeitsschritte die Gegenschneide 3 die sich während des Verstellvorgangs drehende Messertrommel 2 berührt. Im Fall einer Berührung wird der jeweils durchgeführte Arbeitsschritt abgewandelt, indem die Steuereinrichtung 6 die jeweils aktivierte Verstelleinrichtung 4 oder 5 derart ansteuert, dass die Verstelleinrichtung 4 oder 5 die ihr zugeordnete Seite der Gegenschneide 3 nach Zurückstellen um die zweite Stellweite zusätzlich um eine dritte Stellweite von der Messertrommel 2 wegfährt, wobei die zweite und dritte Stellweite zusammen größer sind als die erste Stellweite. Ein derartiger Arbeitsschritt, bei dem eine Kollision mit der Messertrommel 2 erkannt wurde, führt effektiv zu einem Zurückstellen der aktiven Seite der Gegenschneide 3 von der Messertrommel 2 weg. Hierdurch wird vorteilhaft eine parallele Ausrichtung der Gegenschneide 3 zum tatsächlichen Kantenverlauf der an der Messertrommel 2 befestigten Schneidmesser 12 herbeigeführt. Da selbst bei Einsatz mehrerer örtlich beabstandeter Schwingungssensoren 7 eine seitliche Zuordnung der Klopfsignale bisher nicht möglich ist, stellt dieses Vorgehen eine vorteilhafte Möglichkeit der Parallelisierung der Gegenschneide dar.

Das Heranfahren der Gegenschneide 3 durch abwechselnde Aktivierung der Verstelleinrichtungen 4 bzw. 5 findet zweckmäßigerweise solange statt, bis die Sensorik in zwei aufeinanderfolgenden Arbeitsschritten eine Berührung mit der Messertrommel 2 erkennt. So ist sichergestellt, dass die Gegenschneide 3 einen minimalen Abstand gegenüber der Messertrommel 2 erreicht hat und parallel zur Kante der Messer 12 ausgerichtet ist.

Um mögliche Einstellungsfehler aufgrund falsch erkannter Berührungssignale oder sonstiger Störungen auszuschließen, kann zusätzlich vorgesehen sein, dass nach Durchführung der Arbeitsschritte zum Heranfahren der Gegenschneide 3 an die Messertrommel 2 die mittels der Inkrementalgeber 8 erfassten Stellweiten der Verstelleinrichtungen 4, 5 im Programm verglichen werden und bei Überschreiten einer im Programm festlegbaren Differenz der Stellweiten eine Wiederholung des gesamten Einstellvorgangs veranlasst wird.

Aus der durch Heranfahren an die Messertrommel 2 erreichten Ausgangsposition kann die Steuereinrichtung 6 abschließend die Gegenschneide 3 durch Ansteuerung der Motoren 21 in eine für den Erntebetrieb gewünschte Betriebsposition verfahren, die von der Ausgangsposition einen beispielsweise durch den Bediener im ablaufenden Programm festlegbaren Abstand aufweist. Die Steuereinrichtung 6 überwacht den Lauf der Motoren 21 über die jeweiligen Inkrementalgeber 8, so dass eine genaue Positionierung möglich ist. Vorteilhaft erfolgt auch das Anfahren der Betriebsposition durch die Motoren 21 abwechselnd in kleinen Schritten, um Verspannungen der Gegenschneide 3 bzw. der Verstelleinrichtungen 4, 5 zu vermeiden.

### Bezugszeichenliste

- 1: Schneidvorrichtung
- 2: Messertrommel
- 3: Gegenschneide
- 4: Verstelleinrichtung
- 5: Verstelleinrichtung
- 6: Steuereinrichtung
- 7: Schwingungssensor
- 8: Inkrementalgeber
- 9: Bedieneinrichtung
- 10: Feldhäcksler
- 11: Einzugsorgan
- 12: Schneidmesser
- 13: Rotationsachse
- 14: Gegenschneidbalken
- 15: Gegenschneidenträger
- 16: Gelenkkopf
- 17: Querträger
- 18: Hebelarm
- 19: Gewindespindel
- 20: Spindelmutter
- 21: Motor
- 22: Bremse
- 23: Anzeige
- 24: Gehäusewand
- 25: Gelenkachse

## Patentansprüche

1. Schneidvorrichtung (1) für Erntegut, umfassend ein in Rotation bringbares Schneidwerkzeug (2) und eine diesem gegenüber verstellbare Gegenschneide (3), deren zwei gegenüberliegenden Enden jeweils an eine Verstelleinrichtung (4, 5) gekoppelt sind, so dass die Abstandslage der Gegenschneide (3) gegenüber dem Schneidwerkzeug (2) veränderbar ist, wobei zur Änderung der Abstandslage der Gegenschneide (3) eine Steuereinrichtung (6) die Verstelleinrichtungen (4, 5) ansteuert,
**dadurch gekennzeichnet, dass** zum Heranfahren der Gegenschneide (3) an das Schneidwerkzeug (2) die Steuereinrichtung (6) so betreibbar ist, dass die Steuereinrichtung (6) vor Beginn des Heranfahrens zunächst eine Ansteuerung der Verstelleinrichtungen (4 und 5) vornimmt, um die Gegenschneide (3) vom Schneidwerkzeug (2) weg zu bewegen und anschließend die Verstelleinrichtungen (4, 5) zur Durchführung jeweils eines Arbeitsschritts abwechselnd zu aktivieren, wobei innerhalb dieses Arbeitsschritts
die jeweils aktivierte Verstelleinrichtung (4, 5) eine Verstellung des ihr zugeordneten Endes der Gegenschneide (3) zunächst um eine erste Stellweite zum Schneidwerkzeug (2) hin und anschließend um eine zweite Stellweite wieder vom Schneidwerkzeug (2) weg durchführt, wobei die zweite Stellweite kleiner ist als die erste Stellweite, wobei durch das wechselseitige gleichmäßige Heranfahren eine weitestgehend parallele Ausrichtung der Gegenschneide (3) gegenüber dem Schneidwerkzeug (2) erreichbar ist, so dass die wechselseitige Durchführung dieser Arbeitsschritte durch Ansteuern der beiden Verstelleinrichtungen (4 und 5) zu einer schrittweisen Annäherung der Gegenschneide (3) an das Schneidwerkzeug (2) führt.

2. Schneidvorrichtung nach Anspruch 1, **dadurch gekennzeichnet, dass** zumindest ein Sensor (7) vorgesehen ist, der sich zur Erkennung einer Berührung von Gegenschneide (3) und Schneidwerkzeug (2) eignet, wobei die Steuereinrichtung (6) die Verstelleinrichtungen (4, 5) in Abhängigkeit empfangener Signale des Sensors (7) ansteuert.

3. Schneidvorrichtung nach Anspruch 1 oder 2, **dadurch gekennzeichnet, dass** zumindest ein Sensor vorgesehen ist, der sich zur Erkennung des Erreichens eines Mindestabstands zwischen Gegenschneide (3) und Schneidwerkzeug (2) eignet, wobei die Steuereinrichtung (6) die Verstelleinrichtungen (4, 5) in Abhängigkeit empfangener Signale des Sensors ansteuert.

4. Schneidvorrichtung nach Anspruch 2 oder 3, **dadurch gekennzeichnet, dass** im Fall einer durch den Sensor (7) erkannten Berührung oder des Erreichens eines Mindestabstands während eines Arbeitsschritts die jeweils aktivierte Verstelleinrichtung (4, 5) eine Verstellung des ihr zugeordneten Endes der Gegenschneide (3) zusätzlich um eine dritte Stellweite vom Schneidwerkzeug (2) weg durchführt, wobei die zweite und dritte Stellweite zusammen größer sind als die erste Stellweite.

5. Schneidvorrichtung nach einem der Ansprüche 1 bis 4, **dadurch gekennzeichnet, dass** die Steuereinrichtung (6) die abwechselnde Aktivierung der Verstelleinrichtungen (4, 5) solange veranlasst, bis der Sensor (7) in zwei aufeinanderfolgenden Arbeitsschritten jeweils eine Berührung oder einen Mindestabstand gegenüber dem Schneidwerkzeug (2) erkannt hat.

6. Schneidvorrichtung nach einem der Ansprüche 1 bis 5, **dadurch gekennzeichnet, dass** jeder Seite der Gegenschneide (3) eine Messeinrichtung (8) zugeordnet ist, die sich zur Erfassung einer mit dem Verstellweg der jeweiligen Seite korrespondierenden Größe eignet.

7. Schneidvorrichtung nach einem der Ansprüche 1 bis 6, **gekennzeichnet durch** eine Starteinrichtung (9), wobei **durch** Auslösen der Starteinrichtung (9) die Steuereinrichtung (6) ein Programm zur Einstellung eines im Programm festlegbaren Abstands der Gegenschneide (3) gegenüber dem Schneidwerkzeug (2) ausführt.

8. Schneidvorrichtung nach einem der Ansprüche 1 bis 7, **dadurch gekennzeichnet, dass** die abwechselnde Aktivierung der Verstelleinrichtungen (4, 5) mit einer Aktivierung derjenigen der beiden Verstelleinrichtungen (4, 5) beginnt, die gemäß eines Signals der ihr zugeordneten Messeinrichtung (8) einen kleineren Abstand gegenüber dem Schneidwerkzeug (2) aufweist.

9. Schneidvorrichtung nach einem der Ansprüche 1 bis 8, **dadurch gekennzeichnet, dass** die Steuereinrichtung (6) betreibbar ist, die Gegenschneide (3) aus einer durch das Heranfahren an das Schneidwerkzeug (2) gefundenen Ausgangsposition durch Ansteuerung der Verstelleinrichtungen (4, 5) in eine Betriebsposition zu verfahren, die von der Ausgangsposition einen festlegbaren Abstand aufweist.

10. Schneidvorrichtung nach einem der Ansprüche 1 bis 9, **dadurch gekennzeichnet, dass** das Programm vor Durchführung der Arbeitsschritte zum Heranfahren der Gegenschneide (3) an das Schneidwerkzeug (2) zunächst eine Ansteuerung der Verstelleinrichtungen (4, 5) vorsieht, um die Gegenschneide (3) vom Schneidwerkzeug (2) weg zu bewegen.

11. Schneidvorrichtung nach einem der Ansprüche 1 bis 10, **dadurch gekennzeichnet, dass** das Programm nach Durchführung der Arbeitsschritte zum Heranfahren der Gegenschneide (3) an das Schneidwerkzeug (2) die Stellweiten der Verstelleinrichtungen (4, 5) vergleicht und bei Überschreiten einer im Programm festlegbaren Differenz der Stellweiten eine Wiederholung des Einstellvorgangs veranlasst.

12. Schneidvorrichtung nach einem der Ansprüche 1 bis 11, **dadurch gekennzeichnet, dass** diese ein Arbeitsorgan einer landwirtschaftlichen Erntemaschine (10) ist.

13. Verfahren zur Einstellung der Gegenschneide (3) einer Schneidvorrichtung für Erntegut, insbesondere einer Schneidvorrichtung (1) nach einem der vorigen Ansprüche, wobei die Schneidvorrichtung (1) ein in Rotation bringbares Schneidwerkzeug (2) und eine diesem gegenüber verstellbare Gegenschneide (3) umfasst, deren zwei gegenüberliegenden Enden jeweils an eine Verstelleinrichtung (4, 5) gekoppelt sind, so dass die Abstandslage der Gegenschneide (3) gegenüber dem Schneidwerkzeug (2) veränderbar ist,
**dadurch gekennzeichnet**,dasszunächstdie Gegenschneide (3) mittels beider Verstelleinrichtungen (4 und 5) um eine bestimmte Stellweite von dem Schneidwerkzeug (2)weggefahren wird, und dass anschließend zum Heranfahren der Gegenschneide (3) an das Schneidwerkzeug (2) die Verstelleinrichtungen (4, 5) zur Durchführung jeweils eines Arbeitsschritts abwechselnd aktiviert werden, wobei innerhalb dieses Arbeitsschritts
die jeweils aktivierte Verstelleinrichtung (4, 5) eine Verstellung des ihr zugeordneten Endes der Gegenschneide (3) zunächst um eine erste Stellweite zum Schneidwerkzeug (2) hin und anschließend um eine zweite Stellweite wieder vom Schneidwerkzeug (2) weg durchführt, wobei die zweite Stellweite kleiner ist als die erste Stellweite, wobei durch das wechselseitige gleichmäßige Heranfahren eine weitestgehend parallele Ausrichtung der Gegenschneide (3) gegenüber dem Schneidwerkzeug (2) erreichbar ist, so dass die wechselseitige Durchführung dieser Arbeitsschritte durch Ansteuern der beiden Verstelleinrichtungen (4 und 5) zu einer schrittweisen Annäherung der Gegenschneide (3) an das Schneidwerkzeug (2) führt.

## Claims

1. A cutting device (1) for crop material including a cutting tool (2) which can be caused to rotate and a counterpart cutting member (3) which is displaceable relative to the cutting tool and whose two oppositely disposed ends are respectively coupled to an adjusting device (4, 5) so that the spacing position of the counterpart cutting member (3) is variable with respect to the cutting tool (2), wherein to change the spacing position of the counterpart cutting member (3) a control device (6) actuates the adjusting devices (4, 5),
**characterised in that** for moving the counterpart cutting member (3) towards the cutting tool (2) the control device (6) is operable in such a way that before beginning the approach process the control device (6) firstly effects actuation of the adjusting devices (4, 5) to move the counterpart cutting member (3) away from the cutting tool (2) and then to alternately activate the adjusting devices (4, 5) for performing a respective working step, wherein within said working step
the respectively activated adjusting device (4, 5) performs an adjustment of the end associated therewith of the counterpart cutting member (3) firstly by a first adjusting distance towards the cutting tool (2) and then by a second adjusting distance away from the cutting tool (2) again, wherein the second adjusting distance is less than the first adjusting distance, wherein a very substantially parallel orientation of the counterpart cutting member (3) with respect to the cutting tool (2) can be achieved by the alternate uniform approach movement so that the alternate implementation of those working steps by actuation of the two adjusting devices (4 and 5) leads to a stepwise approach of the counterpart cutting member (3) to the cutting tool (2).

2. A cutting device according to claim 1 **characterised in that** there is provided at least one sensor suitable for detecting contact between the counterpart cutting member (3) and the cutting tool (2), wherein the control device (6) actuates the adjusting devices (4, 5) in dependence on signals received from the sensor (7).

3. A cutting device according to claim 1 or claim 2 **characterised in that** there is provided at least one sensor suitable for detecting the attainment of a minimum spacing between the counterpart cutting member (3) and the cutting tool (2), wherein the control device (6) actuates the adjusting devices (4, 5) in dependence on signals received from the sensor.

4. A cutting device according to claim 2 or claim 3 **characterised in that** in the case of a contact detected by the sensor (7) or the attainment of a minimum spacing during a working step the respectively activated adjusting device (4, 5) additionally performs adjustment of the end associated therewith of the counterpart cutting member (3) by a third adjusting distance away from the cutting tool (2), the second and third adjusting distances together being greater than the first adjusting distance.

5. A cutting device according to one of claims 1 to 4 **characterised in that** the control device (6) causes alternate activation of the adjusting devices (4, 5) until in two successive working steps the sensor (7) has respectively detected contact or a minimum spacing with respect to the cutting tool (2).

6. A cutting device according to one of claims 1 to 5 **characterised in that** associated with each side of the counterpart cutting member (3) is a measuring device (8) suitable for detecting a parameter corresponding to the adjustment travel of the respective side.

7. A cutting device according to one of claims 1 to 6 **characterised by** a starting device (9) wherein triggering of the starting device (9) causes the control device (6) to perform a program for adjustment of a spacing which can be fixed in the program of the counterpart cutting member (3) relative to the cutting tool (2).

8. A cutting device according to one of claims 1 to 7 **characterised in that** the alternate activation of the adjusting devices (4, 5) begins with an activation of that one of the two adjusting devices (4, 5) which in accordance with a signal from the measuring device (8) associated therewith has a smaller spacing relative to the cutting tool (2).

9. A cutting device according to one of claims 1 to 8 **characterised in that** the control device (6) is operable to move the counterpart cutting member (3) out of a starting position found by moving towards the cutting tool (2) by actuation of the adjusting devices (4, 5) into an operating position which is at a spacing which can be established from the starting position.

10. A cutting device according to one of claims 1 to 9 **characterised in that** before performing the working steps for moving the counterpart cutting member (3) towards the cutting tool (2) the program firstly provides for actuation of the adjusting devices (4, 5) to move the counterpart cutting member (3) away from the cutting tool (2).

11. A cutting device according to one of claims 1 to 10 **characterised in that** after performing the cutting steps for moving the counterpart cutting member (3) towards the cutting tool (2) the program compares the adjusting distances of the adjusting devices (4, 5) and causes repetition of the adjusting operation when a difference which can be established in the program between the adjusting distances is exceeded.

12. A cutting device according to one of claims 1 to 11 **characterised in that** it is a working member of an agricultural harvester (10).

13. A method of adjusting the counterpart cutting member (3) of a cutting device for crop material, in particular a cutting device (1) according to one of the preceding claims, wherein the cutting device (1) includes a cutting tool (2) which can be caused to rotate and a counterpart cutting member (3) which is displaceable relative thereto and whose two opposite ends are respectively coupled to an adjusting device (4, 5) so that the spacing position of the counterpart cutting member (3) with respect to the cutting tool (2) is variable,
**characterised in that** firstly the counterpart cutting member (3) is moved away from the cutting tool (2) by a given adjusting distance by means of both adjusting devices (4 and 5) and then for moving the counterpart cutting member (3) towards the cutting tool (2) the adjusting devices (4, 5) are alternately activated to perform a respective working step, wherein within said working step
the respectively activated adjusting device (4, 5) performs an adjustment of the end associated therewith of the counterpart cutting member (3) firstly by a first adjusting distance towards the cutting tool (2) and then by a second adjusting distance away from the cutting tool (2) again, wherein the second adjusting distance is less than the first adjusting distance, wherein a very substantially parallel orientation of the counterpart cutting member (3) with respect to the cutting tool (2) can be achieved by the alternate uniform approach movement so that the alternate implementation of those working steps by actuation of the two adjusting devices (4 and 5) leads to a stepwise approach of the counterpart cutting member (3) to the cutting tool (2).

## Revendications

1. Dispositif de coupe (1) de produit de récolte, comprenant un outil de coupe (2) pouvant être mis en rotation et un contre-couteau (3) qui est réglable par rapport à celui-ci et dont les deux extrémités opposées sont chacune reliées à un dispositif de réglage (4, 5), de sorte que l'écartement du contre-couteau (3) par rapport à l'outil de coupe (2) est variable, un dispositif de commande (6) actionnant les dispositifs de réglage (4, 5) pour modifier l'écartement du contre-couteau (3), **caractérisé en ce que**, pour rapprocher le contre-couteau (3) de l'outil de coupe (2), le dispositif de commande (6) peut être actionné de façon qu'avant le début du rapprochement le dispositif de commande (6) procède d'abord à un actionnement des dispositifs de réglage (4, 5) afin d'éloigner le contre-couteau (3) de l'outil de coupe (2) et d'activer ensuite les dispositifs de réglage (4, 5) en alternance pour réaliser à chaque fois une étape de travail, à l'intérieur de cette étape de travail le dispositif de réglage respectif activé (4, 5) réalisant un déplacement de l'extrémité du contre-couteau (3) qui lui est associée, d'abord selon une première distance de réglage en direction de l'outil de coupe (2) et ensuite selon une deuxième distance de réglage en l'éloignant à nouveau de l'outil de coupe (2), la deuxième distance de réglage étant inférieure à la première distance de réglage, le rapprochement mutuel uniforme permettant de donner au contre-couteau (3) une orientation en très grande partie parallèle à l'outil de coupe (2), de sorte que l'exécution réciproque de ces étapes de travail par actionnement des deux dispositifs de réglage (4 et 5) conduit à un rapprochement pas à pas du contre-couteau (3) par rapport à l'outil de coupe (2).

2. Dispositif de coupe selon la revendication 1, **caractérisé en ce qu'**il est prévu au moins un capteur (7) apte à détecter un contact entre le contre-couteau (3) et l'outil de coupe (2), le dispositif de commande (6) actionnant les dispositifs de réglage (4, 5) en fonction de signaux reçus du capteur (7).

3. Dispositif de coupe selon la revendication 1 ou 2, **caractérisé en ce qu'**il est prévu au moins un capteur apte à détecter l'atteinte d'un écartement minimal entre le contre-couteau (3) et l'outil de coupe (2), le dispositif de commande (6) actionnant les dispositifs de réglage (4, 5) en fonction de signaux reçus du capteur.

4. Dispositif de coupe selon la revendication 2 ou 3, **caractérisé en ce qu'**en cas de contact détecté par le capteur (7) ou d'atteinte d'un écartement minimal durant une étape de travail le dispositif de réglage respectif activé (4, 5) effectue un déplacement supplémentaire de l'extrémité du contre-couteau (3) qui lui est associée, selon une troisième distance de réglage en l'éloignant de l'outil de coupe (2), les deuxième et troisième distances de réglage cumulées étant supérieures à la première distance de réglage.

5. Dispositif de coupe selon une des revendications 1 à 4, **caractérisé en ce que** le dispositif de commande (6) provoque l'activation alternée des dispositifs de réglage (4, 5) jusqu'à ce que le capteur (7) ait détecté dans deux étapes de travail successives un contact ou un écartement minimal par rapport à l'outil de coupe (2).

6. Dispositif de coupe selon une des revendications 1 à 5, **caractérisé en ce qu'**à chaque côté du contre-couteau (3) est associé un dispositif de mesure (8) apte à enregistrer une grandeur correspondant à la course de réglage du côté en question.

7. Dispositif de coupe selon une des revendications 1 à 6, **caractérisé par** un dispositif de lancement (9), le dispositif de commande (6) exécutant, en cas de déclenchement du dispositif de lancement (9), un programme pour régler un écartement, définissable dans le programme, du contre-couteau (3) par rapport à l'outil de coupe (2).

8. Dispositif de coupe selon une des revendications 1 à 7, **caractérisé en ce que** l'activation alternée des dispositifs de réglage (4, 5) commence par une activation de celui des deux dispositifs de réglage (4, 5) qui, selon un signal du dispositif de mesure (8) qui lui est associé, présente le plus faible écart par rapport à l'outil de coupe (2).

9. Dispositif de coupe selon une des revendications 1 à 8, **caractérisé en ce que** le dispositif de commande (6) peut être actionné de façon que le contre-couteau (3) soit déplacé, par actionnement des dispositifs de réglage (4, 5), d'une position de départ atteinte après rapprochement par rapport à l'outil de coupe (2) vers une position de fonctionnement présentant un écartement définissable par rapport à la position de départ.

10. Dispositif de coupe selon une des revendications 1 à 9, **caractérisé en ce qu'**avant de réaliser les étapes de travail visant à rapprocher le contre-couteau (3) de l'outil de coupe (2) le programme prévoit d'abord d'actionner les dispositifs de réglage (4, 5) pour éloigner le contre-couteau (3) de l'outil de coupe (2).

11. Dispositif de coupe selon une des revendications 1 à 10, **caractérisé en ce qu'**à l'issue des étapes de travail visant à rapprocher le contre-couteau (3) de l'outil de coupe (2) le programme compare les distances de réglage des dispositifs de réglage (4, 5) et, en cas de surpassement d'une différence entre les distances de réglage définissable dans le programme, provoque une répétition de l'opération de réglage.

12. Dispositif de coupe selon une des revendications 1 à 11, **caractérisé en ce que** celui-ci est un organe de travail d'une machine agricole de récolte (10).

13. Procédé de réglage du contre-couteau (3) d'un dispositif de coupe de produit de récolte, en particulier d'un dispositif de coupe (1) selon une des revendications précédentes, le dispositif de coupe (1) comprenant un outil de coupe (2) pouvant être mis en rotation et un contre-couteau (3) qui est réglable par rapport à celui-ci et dont les deux extrémités opposées sont chacune reliées à un dispositif de réglage (4, 5), de sorte que l'écartement du contre-couteau (3) par rapport à l'outil de coupe (2) est variable, **caractérisé en ce que** le contre-couteau (3) est d'abord éloigné de l'outil de coupe (2) selon une distance de réglage déterminée au moyen des deux dispositifs de réglage (4 et 5) et **en ce qu'**ensuite, pour rapprocher le contre-couteau (3) de l'outil de coupe (2), les dispositifs de réglage (4, 5) sont activés en alternance pour réaliser chacun une étape de travail, à l'intérieur d'une étape de travail le dispositif de réglage respectif activé (4, 5) réalisant un déplacement de l'extrémité du contre-couteau (3) qui lui est associée, d'abord selon une première distance de réglage en direction de l'outil de coupe (2) et ensuite selon une deuxième distance de réglage en l'éloignant à nouveau de l'outil de coupe (2), la deuxième distance de réglage étant inférieure à la première distance de réglage, le rapprochement mutuel uniforme permettant de donner au contre-couteau (3) une orientation en très grande partie parallèle à l'outil de coupe (2), de sorte que l'exécution réciproque de ces étapes de travail par actionnement des deux dispositifs de réglage (4 et 5) conduit à un rapprochement pas à pas du contre-couteau (3) par rapport à l'outil de coupe (2).
